# FASCICULE DE BREVET EUROPEEN

(11) **EP 0 394 114 B1**
(45) Date de publication et mention de la délivrance du brevet: **17.07.1996**
(21) Numéro de dépôt: 90401025.3
(22) Date de dépôt: 13.04.1990
(51) Int. Cl.: G06F 13/38, G06F 9/44

(54) **Coupleur multifonctions entre une unité centrale d'ordinateur et les différents organes périphériques de ce dernier**
Multifunktionskoppler zwischen einer zentralen Verarbeitungseinheit eines Rechners und verschiedenen Peripheriegeräten dieses Rechners
Multifunctions coupler between a central processing unit of a computer and several peripheral devices of this computer

(30) Priorité: 17.04.1989 FR 8905065
(43) Date de publication de la demande: 24.10.1990
(73) Titulaire: BULL S.A., F-92800 Puteaux (FR)
(72) Inventeur: Le Gallo, Rémy, F-78150 Le Chesnay (FR)
(74) Mandataire: Gouesmel, Daniel

(56) Documents cités:
- EP-A- 0 100 140
- EP-A- 0 273 136
- WO-A-82/03285
- GB-A- 2 162 346
- GB-A- 2 203 869
- PATENT ABSTRACTS OF JAPAN vol. 6, no. 162 (P-137)(1040) 25 août 1982 & JP-A-57 79540

## Description

La présente invention concerne un coupleur multifonctions entre une unité centrale d'ordinateur et les différents organes périphériques de ce dernier. Elle est plus particulièrement destinée à organiser le transfert des informations entre chaque organe périphérique et l'unité centrale, quel que soit le type d'application que l'on cherche à mettre en oeuvre.

De façon générale, un système informatique permet à des usagers humains de définir des traitements exécutables au moyen d'organes de mémorisation, d'exécution et d'échange avec son environnement extérieur. Des équipements variés peuvent ainsi servir de support à des systèmes informatiques : ce sont les grands ordinateurs, ou bien les miniordinateurs ou encore les ordinateurs à usage individuel.

Quel que soit le type de système informatique, il existe des fonctions de base communes, sous diverses formes, à tous ces systèmes. Ces fonctions de base sont effectuées par les différents éléments structurels, matériels et logiciels, du système informatique. Pour simplifier, on supposera que ce système informatique est un ordinateur classique constitué d'une unité centrale (Central Processor Unit, en anglais, en abrégé CPU) et de différents périphériques, que ce soient des périphériques magnétiques, tels que mémoires à disque ou dérouleurs de bandes ou des périphériques dits d'entrée-sortie permettant l'échange de données avec l'extérieur (imprimantes et différents terminaux tels que minitel, etc ...).

L'unité centrale est formée par un processeur central et une mémoire principale à laquelle ce processeur est relié et d'un processeur d'entrée-sortie assurant le contrôle de l'échange des données entre la mémoire et les différents organes périphériques.

Le transfert physique des données entre l'unité centrale et le périphérique s'effectue par l'intermédiaire d'un coupleur qui est relié d'une part au bus de sortie de l'unité centrale et d'autre part à l'organe périphérique que l'on cherche à mettre en oeuvre.

Les traitements d'information ou encore travaux que l'on cherche à faire exécuter par l'ordinateur sont extrêmement variés, par exemple établissement de fiches de paye, recherche de correspondants dans un annuaire téléphonique, réservation de place d'avion ou de chemin de fer, etc ... . Chaque type de traitement ou encore chaque travail à effectuer définit une application. La mise en oeuvre de cette application au moyen de l'ordinateur est effectuée grâce à un programme d'application. Ce programme d'application est mis en oeuvre dans le processeur central de l'unité centrale de l'ordinateur qui contient les circuits nécessaires à l'exécution du jeu d'instructions qui définissent ce programme. Ces instructions ainsi que les données sur lesquelles elles opèrent sont contenues généralement dans la mémoire principale. La réalisation de chacune des instructions du programme est effectuée par le processeur.

Afin de mieux comprendre ce qu'est une application, on considère l'exemple suivant, à savoir la réservation automatique de place d'avion. Chaque fois qu'un voyageur s'adresse à un guichet, l'employé de la compagnie ou de l'agence de voyages utilise un terminal à clavier et écran relié à un ordinateur. Il interroge l'ordinateur pour proposer un vol déterminé et pour ce vol une place au voyageur. Après accord de l'ordinateur, qui lui est transmis de manière visuelle par l'écran du terminal, l'employé effectue la réservation. La liste des vols des différentes compagnies aériennes, ainsi que la liste des places disponibles et la liste des places occupées pour un vol donné d'une compagnie déterminée, sont rangées généralement dans une mémoire secondaire de l'ordinateur, par exemple, une mémoire à disque, avec leurs différentes caractéristiques. Le programme qui réalise physiquement dans l'ordinateur la consultation et la mise à jour des listes pour le compte des différents voyageurs est appelé programme utilisateur ou programme d'application (voir plus haut). La zone de mémoire où sont stockées dans l'ordinateur les caractéristiques d'une liste de vols ou d'une liste de places s'appelle un fichier.

Il est clair qu'à partir d'un même terminal, on peut chercher à mettre en oeuvre différentes applications, par exemple recherche d'un correspondant dans un annuaire téléphonique, recherche de places pour un spectacle, consultation d'une banque de données, etc ... . Par ailleurs, d'un terminal à l'autre, les applications qu'on cherche à mettre en oeuvre peuvent être différentes.

L'exemple de réservation de place d'avion ou de recherche d'un abonné au téléphone dans un annuaire téléphonique peut être considéré comme une application de gestion. Mais il existe également des applications scientifiques ou encore des applications industrielles de contrôle automatique de processus de production.

Entre les différents terminaux et l'unité centrale de l'ordinateur, on trouve un ou plusieurs coupleurs qui assurent la transmission des informations entre chaque terminal et l'unité centrale. Au cours de cette transmission, on vérifie la cohérence des informations et des formats des différentes trames d'information transmises, c'est-à-dire, on vérifie si le format de ces trames est cohérent avec le mode de transmission utilisé propre à chaque terminal. On rappelle qu'une trame d'information est le bloc élémentaire d'information émis par un terminal, qu'elle est structurée, comporte un message de début et de fin, des signaux de synchronisation pour en déduire l'horloge, l'adresse du terminal émetteur, la longueur des données, les données utiles, etc Le coupleur doit donc vérifier si chaque trame d'information est bien transmise avec le format approprié, ce format devant être conforme au protocole de transmission qui régit le dialogue entre la station et l'unité centrale. Ce protocole définit pour chaque station les règles d'accès à celles-ci. Par ailleurs, le coupleur doit transmettre ces informations sans erreur et régénérer des signaux dont l'amplitude se trouve affaiblie au cours du processus de transmission entre la station et l'unité centrale.

Le document WO-A-82/03285 décrit l'utilisation d'une portion de mémoire morte pour stocker une partie de micrologiciel d'application spécifiques à un périphérique déterminé, l'autre partie étant contenue dans une mémoire commune à tous les micrologiciels d'application.

Par ailleurs, on connaît deux types principaux de coupleurs utilisés dans la pratique courante, par exemple, dans l'ordinateur DPS 6 de la Société BULL S.A. .

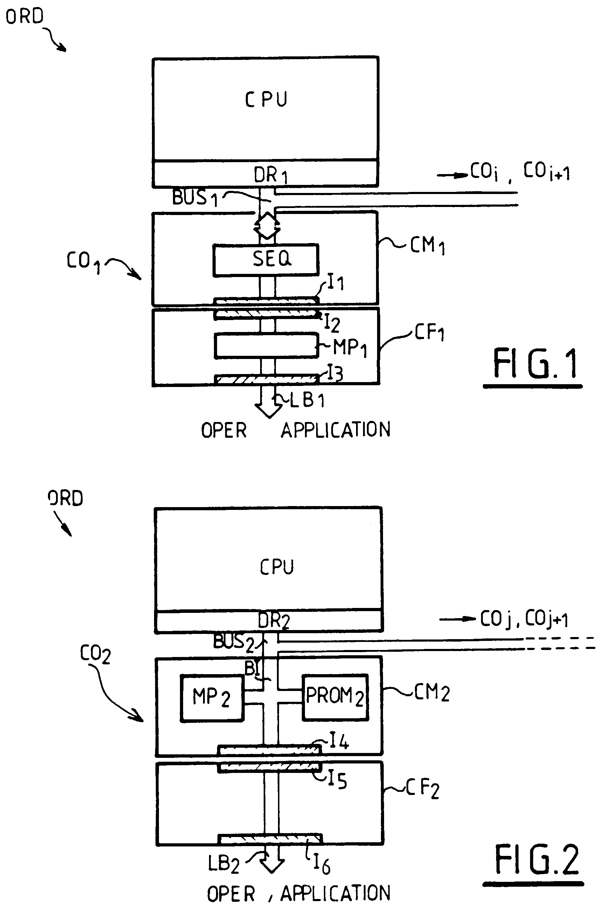

Le premier, à savoir CO₁, est représenté par exemple à la figure 1.

Ce coupleur CO₁ comprend d'une part une carte-mère CM₁ et une carte-fille CF₁.

La carte-mère est reliée physiquement à l'unité centrale CPU de l'ordinateur ORD par l'intermédiaire d'un bus BUS₁ où les bits d'information sont transmis en parallèle.

L'unité centrale CPU comprend le programme d'application qu'elle met en oeuvre en association avec l'organe périphérique OPER (non représenté à la figure 1 pour simplifier).

On a représenté à la figure 1, l'interface entre le programme d'application contenu dans la mémoire centrale de l'unité centrale CPU et le coupleur CO₁, à savoir DR₁, qui est en fait un module logiciel, plus communément appelé driver, selon la terminologie anglo-saxonne et qui est décrit dans les manuels techniques relatifs à l'ordinateur DPS 6.

La carte-mère CM₁ est également reliée physiquement par l'intermédiaire du bus parallèle BUS₁ à d'autres coupleurs, de structure identique à CO₁, à savoir COᵢ, CO_{i + 1}, etc ... .

La carte-mère CM₁ comporte une interface physique I₁ et la carte-fille CF₁ comporte une interface physique I₂, lesquelles assurent la continuité physique des signaux qui transitent entre la carte CM₁ et la carte CF₁. De même la carte-fille CF₁ comporte une interface physique I₃ qui assure la continuité physique des signaux qui transitent entre la carte-fille CF₁ et l'organe périphérique OPER par l'intermédiaire d'un bus parallèle LB₁. Ce bus parallèle est par exemple un bus pouvant faire transiter 8 bits en parallèle. Les interfaces I₁, I₂ sont de simples connecteurs assurant la connexion physique entre les conducteurs de la carte-mère et ceux de la carte-fille.

L'interface I₃ est par exemple constituée par des coupleurs optoélectroniques de type HP2602 HCL dont la bande passante est de 10 MH_{z}. Ces coupleurs optoélectroniques réalisent l'adaptation électrique des signaux et permettent l'isolation électrique entre les différents éléments constituant l'ordinateur et l'organe périphérique OPER.

La carte-mère CM₁ est une carte non intelligente, et est vendue sous la désignation commerciale GPI (General Purpose Interface) avec l'ordinateur DPS 6. Elle comprend essentiellement un séquenceur SEQ d'accès direct mémoire DMA, cette procédure d'accès direct étant parfaitement connue de l'homme du métier et étant par ailleurs décrite dans les manuels d'utilisation technique de l'ordinateur DPS 6.

La carte-fille CF₁ comporte un microprocesseur MP₁, par exemple de type 68010 de la firme MOTOROLA.

Dans cette solution, le micrologiciel comprenant l'ensemble des microinstructions permettant d'assurer le transfert des informations de l'organe périphérique OPER vers l'unité centrale CPU ou vice-versa, de façon cohérente, et sans altération des différents signaux représentant les bits d'information est contenu dans le microprocesseur MP₁. Dans la suite du texte, ce micrologiciel sera désigné sous l'appellation micrologiciel d'application. Par ailleurs, en cas d'interruption des échanges d'informations entre l'unité centrale CPU et le périphérique OPER (dû par exemple au fait que l'unité centrale traite plusieurs programmes d'application en association avec différents organes périphériques simultanément, ces programmes d'application pouvant donc être interrompu à un moment ou à un autre pour permettre le traitement d'autres programmes d'application), c'est le logiciel de l'unité centrale qui gère ces interruptions.

Dans ce premier type de coupleur, on voit qu'à chaque nouvelle application il faut changer d'une part la carte-fille CF₁ mais également le logiciel qui est contenu dans l'unité centrale. Cette solution n'est pas suffisamment souple et est relativement compliquée.

On considère maintenant le deuxième type de coupleur, à savoir CO₂ qui est représenté à la figure 2 et qui a la désignation commerciale MDC (Multi Device Controller) pour l'ordinateur DPS 6, déjà mentionné.

Sur cette même figure 2, on a représenté l'unité centrale CPU analogue à celle de la figure 1, avec son interface logiciel DR₂, analogue à l 'interface DR₁, et le coupleur CO₂ composé de la carte-mère CM₂ et de la carte-fille CF₂.

La carte-mère CM₂ est reliée physiquement à l'unité centrale CPU par l'intermédiaire du bus parallèle BUS₂ identique au BUS₁. Cette unité centrale CPU est reliée par l'intermédiaire de ce bus BUS₂ à d'autres coupleurs, de structure identique au coupleur CO₂, à savoir COⱼ, CO_{j + 1}, etc ... .

La carte-mère CM₂ comporte une interface physique I₄, analogue à l'interface I₁ de la carte-mère CM₁ de la figure 1, alors que la carte-fille CF₂ comporte deux interfaces I₅ et I₆ analogues aux interfaces I₂ et I₃ de la carte-fille CF₁ de la figure 1. Le rôle des interfaces I₄, I₅, I₆ est analogue au rôle des interfaces I₁, I₂, I₃ montrées à la figure 1.

La carte-fille CF₂ est reliée par l'intermédiaire du bus parallèle LB₂ analogue à LB₁ à l'organe périphérique OPER.

La carte-fille CF₂ est une carte non intelligente et ne comporte que des circuits de connexion physique et des outils d'interface, par exemple du type HP2602 HCL précité. La carte-mère CM₂ comporte un microprocesseur MP₂, et une mémoire morte de type PROM, à savoir PROM₂, le microprocesseur MP₂ et la mémoire morte PROM₂ étant reliés au même bus interne BI du microprocesseur MP₂, lui-même relié au bus BUS₂.

Pour une application donnée, le micrologiciel relatif à cette application permettant le transfert des informations entre l'organe périphérique OPER et l'unité centrale CPU réside entièrement dans la carte-mère, à l'intérieur de la mémoire morte PROM₂. Il est mis en oeuvre par le microprocesseur MP₂.

L'inconvénient de ce deuxième type de coupleur CO₂ réside en ce que, pour chaque nouvelle application, il faut réaliser une nouvelle version de la carte-mère, puisque le micrologiciel relatif à l'application est contenu dans une mémoire PROM non effaçable. Par ailleurs, le micrologiciel étant contenu et exécutable en mémoire de type PROM, où le temps d'accès est relativement élevé (de 150 à 200 nanosecondes), ce micropresseur MP₂, se trouve ralenti du fait du temps d'accès relativement long de la mémoire PROM (le temps d'accès des microprocesseurs est de l'ordre de 100 nanosecondes). En conséquence, la puissance disponible du microprocesseur est diminuée d'autant.

En conclusion, les inconvénients majeurs des deux solutions de coupleurs existantes sont :
- soit la limitation de puissance disponible des cartes-mères due au micrologiciel contenu et exécutable en mémoire PROM,
- soit la nécessité de changer les cartes-mères ou l'ensemble carte-mère plus carte-fille pour chaque nouvelle application spécifique.

La présente invention permet de remédier à ces inconvénients en rendant la carte-mère indépendante de l'application tant du point de vue matériel que logiciel, et en mémorisant la partie du micrologiciel propre à une application donnée dans une mémoire de type EPROM contenue dans la carte-fille. Lors de l'exécution de l'application, le micrologiciel contenu dans la carte-fille est transféré dans une mémoire vive de type SRAM contenue dans la carte-mère, le micrologiciel dans son ensemble étant exécuté à la vitesse maximum du microprocesseur dans cette mémoire de type SRAM. Ainsi, dans cette solution propre à l'invention, seule la partie du micrologiciel spécifique à l'application donnée sera à développer. On réalise donc une carte-mère universelle commune à toutes les applications. Seules les cartes-filles sont changées d'une application à une autre.

Selon l'invention, le coupleur multifonctions entre l'unité centrale d'ordinateur et les différents organes périphériques de ce dernier contenant au moins un micrologiciel d'application commandant le transfert des informations entre, d'une part l'organe périphérique mettant en oeuvre au moins un programme d'application contenu dans l'unité centrale et d'autre part, l'unité centrale proprement dite, le micrologiciel d'application contenant l'ensemble des microinstructions permettant d'assurer ledit transfert de façon cohérente, sans altération des différents signaux représentant les bits d'information comprenant une carte-mère associée à au moins une carte-fille, la carte-mère comportant une première interface de connexion vers le bus de sortie de l'unité centrale et une seconde interface de connexion vers la carte-fille,
- un microprocesseur de contrôle et de commande disposé entre la première et la seconde interface, la carte-fille comprenant une interface de connexion vers l'organe périphérique et une interface de connexion vers la carte-mère,
est caractérisé en ce que la carte-mère comprend une mémoire vive et une première mémoire morte reliées au bus de sortie du microprocesseur et la carte-fille une seconde mémoire morte, le micrologiciel d'application comprenant une première partie contenue dans la première mémoire morte de la carte-mère commune pour tous les micrologiciels d'application et une seconde partie contenue dans la seconde mémoire morte de la carte-fille spécifique à l'application mise en oeuvre par l'organe périphérique associé à la carte-fille, cette seconde partie, non exécutable lorsqu'elle est en carte-fille, n'étant rendue exécutable qu'après son transfert dans la mémoire vive de la carte-mère.

D'autres caractéristiques et avantages de la présente invention apparaîtront dans la description suivante donnée à titre d'exemple non limitatif et en se référant aux dessins annexés.

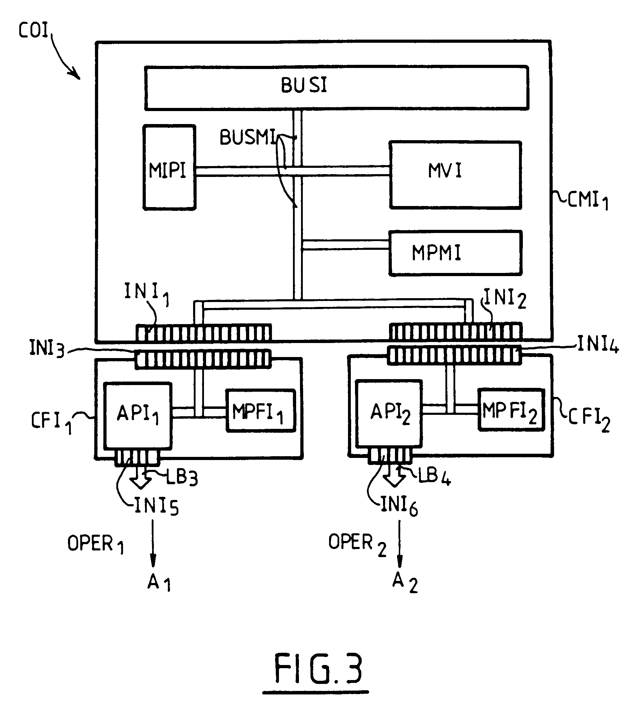

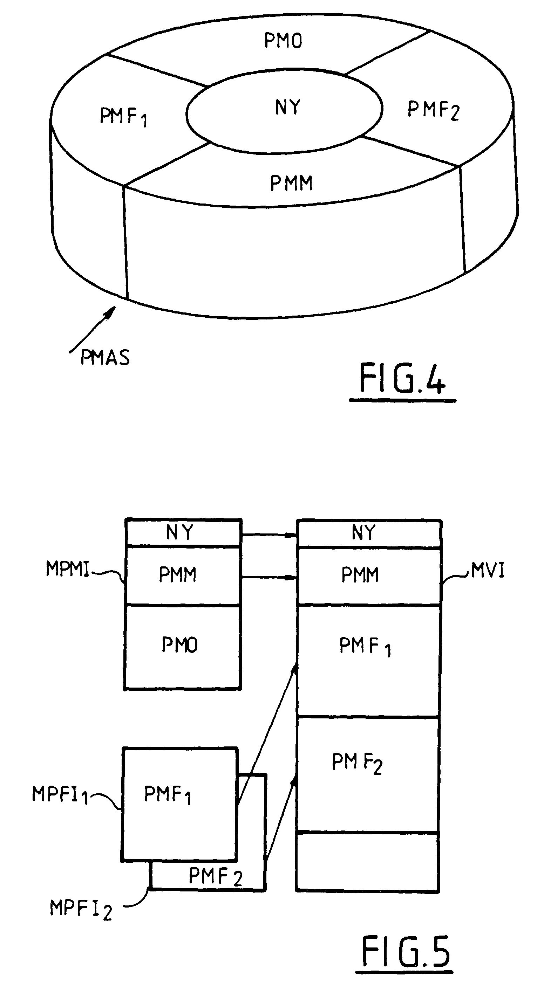

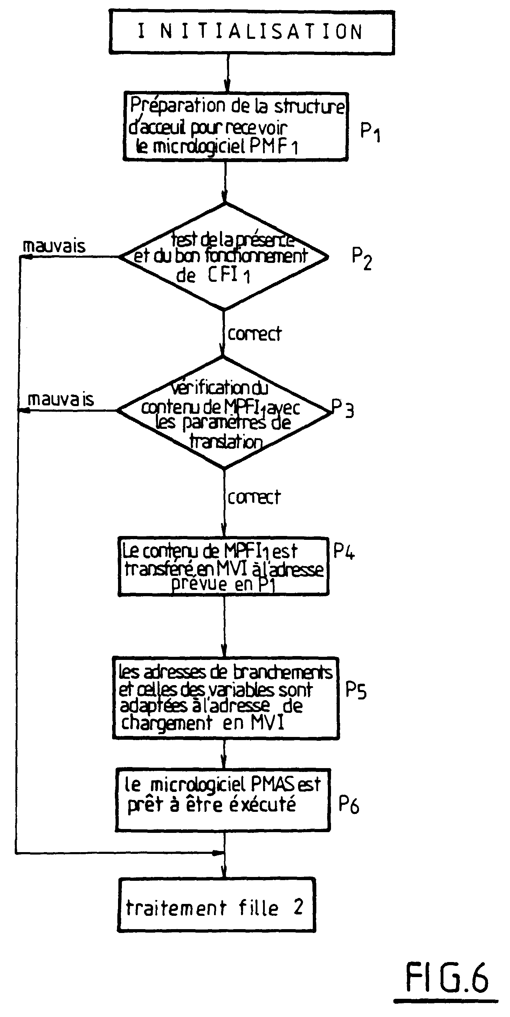

Sur ces dessins :
. La figure 1 rappelle comment est constitué un premier type de coupleur selon l'art antérieur,
. La figure 2 rappelle comment est constitué un second type de coupleur selon l'art antérieur,
. La figure 3 montre le schéma constitutif du coupleur selon l'invention,
. La figure 4 montre les différents ensembles constituant le micrologiciel relatif à une application spécifique,
. La figure 5 illustre le fonctionnement du coupleur selon l'invention, montrant plus particulièrement comment est transférée la partie du micrologiciel contenue dans la carte-fille vers la carte-mère,
. La figure 6 est un organigramme montrant comment est chargé l'ensemble du micrologiciel relatif à chaque application dans la carte-mère avant son exécution.

On On considère la figure 3 qui représente le coupleur COI selon l'invention.

Ce dernier comprend une carte-mère CMI₁ et une pluralité de cartes-filles associées, dont seulement deux sont représentées pour simplifier, à la figure 3, à savoir les cartes-filles CFI₁ et CFI₂.

La carte-mère CMI₁ est reliée à l'unité centrale CPU (non représentée pour simplifier à la figure 3) par l'intermédiaire du mégabus BUSI, identique au bus BUS₁ et BUS₂ montrés aux figures 1 et 2.

La carte-mère CMI₁ comprend un microprocesseur MIPI, une mémoire vive MVI de type SRAM, et une mémoire morte reprogrammable de type EPROM, à savoir MPMI. Par ailleurs, la carte-mère CMI₁ comporte deux interfaces INI₁ et INI₂ qui assurent respectivement le couplage avec les cartes-filles CFI₁ et CFI₂. Les interfaces INI₁ et INI₂ sont analogues aux interfaces I₁ et I₄ montrés aux figures 1 et 2.

Le microprocesseur MIPI et les mémoires vives MVI et programmables MPMI sont connectés au même bus interne du microprocesseur MIPI, à savoir BUSMI, ce bus étant lui-même connecté au mégabus BUSI d'une part, et aux deux interfaces INI₁ et INI₂ d'autre part.

Le microprocesseur MIPI est par exemple du type 68020, de la firme MOTOROLA SEMI-CONDUCTORS, par exemple, sise à Colvilles Road, Kelvin Estate - East Kilbride à Glasgow en Ecosse. Ce microprocesseur est donc décrit dans les notices techniques qui lui sont consacrées par ce constructeur. On rappelle qu'un tel processeur est rythmé par une horloge de 16,6 MHz.

Le bus interne BUSMI du microprocesseur MIPI est un bus parallèle sur 32 bits et les transferts d'informations avec le mégabus BUSI et avec les cartes-filles CFI₁ et CFI₂ sont réalisés en mode accès direct mémoire DMA.

La mémoire vive MVI de type SRAM a une capacité mémoire de 256 kilooctets et est organisée en 64 kilomots de 32 bits.

La mémoire morte MPMI de type EPROM contient un micrologiciel propre à la carte-mère, qui est désigné par PMR, un programme moniteur de mise au point, à savoir PMO, et le noyau central NY du micrologiciel dont la fonction sera détaillée plus loin.

Les deux cartes-filles CFI₁ et CFI₂ ont une structure identique. La carte-fille CFI₁ comporte un circuit d'application API₁ et une mémoire morte reprogrammable de type EPROM, à savoir MPFI₁, alors que la carte-fille CFI₂ comporte un circuit d'application API₂ identique au circuit API₁ et une mémoire morte reprogrammable MPFI₂ identique à MPFI₁.

Par ailleurs, la carte-fille CFI₁ comporte une interface INI₃ de connexion avec la carte-mère CMI₁ et une interface vers le périphérique INI₅, alors que la carte-fille CFI₂ comporte une interface INI₄ de connexion avec la carte-mère CMI₁ et une interface INI₆ vers l'organe périphérique qui met en oeuvre l'application A₂. Elle est reliée à l'organe périphérique par exemple par un bus LB₃ (LB₄ pour CFI₂) identique à LB₁ ou LB₂, parallèle sur huit bits, mais il est clair que cette liaison peut être réalisée différemment par exemple être de type série.

Les interfaces INI₃ et INI₅ d'une part, et INI₄, INI₆ d'autre part sont identiques par exemple aux interfaces I₂, I₃ et I₆ montrées respectivement aux figures 1 et 2.

Les mémoires mortes MPFI₁ et MPFI₂ contiennent chacune un micrologiciel qui est spécifique à l'application A₁ ou A₂ mise en oeuvre par l'organe périphérique OPER₁ ou OPER₂. Aucun des micrologiciels résidant dans les mémoires MPFI₁ et MPFI₂ n'est exécutable. De ce fait, peu importe la structure physique qui va permettre de stocker chacun de ceux-ci. On peut donc les stocker soit sur un support à 8, à 16 ou à 32 bits. Ceci permet une grande souplesse d'utilisation pour les cartes-filles. Ces programmes résidant dans les mémoires mortes de type EPROM, à savoir MPFI₁ et MPFI₂ sont rendus exécutables en étant chargés dans la mémoire vive MVI de type SRAM de la carte-mère CMI₁. Le chargement de ces micrologiciels contenus dans les mémoires mortes des cartes-filles a lieu sous la conduite du noyau NY du micrologiciel . Dans les différentes mémoires mortes MPF₁, MPFI₂, etc ..., des cartes-filles CFI₁, CFI₂, etc ..., la suite des microinstructions constituant les micrologiciels sont chargées aux mêmes adresses physiques. De ce fait, il est impossible de les différencier lorsqu'ils sont contenus dans les cartes-filles. C'est la raison pour laquelle ils ne peuvent être rendus exécutables à l'intérieur de celles-ci. C'est le noyau du système NY qui, lors du chargement de ces micrologiciels à l'intérieur de la mémoire MVI, les différencie. Le noyau NY charge les microinstructions du micrologiciel contenu dans la carte-fille à des adresses physiques en mémoire vive MVI qui sont différentes de celles auxquelles sont chargées ces mêmes microinstructions en carte-fille (CFI₁ ou CFI₂) . Ainsi, si, par exemple les microinstructions du micrologiciel de la carte CFI₁ sont chargées dans MPFI₁ aux adresses 1 à 100, le noyau NY charge celles-ci par exemple, aux adresses 1000 à 1100 en mémoire vive MVI. Il est par ailleurs évident que les microinstructions du micrologiciel de la carte CFI₂ sont chargées par NY dans MVI à des adresses autres que les adresses 1000 à 1100 et qu'il en est de même pour les microinstructions des micrologiciels contenus dans les cartes-filles autres que CFI₁ et CFI₂. Ainsi, chacun des micrologiciels contenu dans les cartes-filles, qui constitue une tâche spécifique exécutée par le noyau du système, ne pourra être exécuté que lorsqu'il aura été chargé et mis en place dans la mémoire vive MVI.

En conclusion, on peut dire que le micrologiciel d'application PMAS qui va organiser le transfert des informations entre l'unité centrale CPU et l'organe périphérique OPER₁ ou OPER₂ pour la mise en oeuvre du programme d'application contenu dans la mémoire centrale de l'unité centrale CPU est constitué de la manière indiquée à la figure 4.

Ce micrologiciel PMAS est donc constitué du noyau central NY et d'un certain nombre de modules micrologiciels. Ces différents modules micrologiciels sont les micrologiciels PMF₁ et PMF₂ contenus dans les mémoires mortes MPFI₁ et MPFI₂ des cartes-filles CFI₁ et CFI₂ (voir également figure 5) et le micrologiciel PMM qui est contenu dans la mémoire morte MPMI de la carte-mère CMI₁, et enfin le moniteur PMO, également contenu dans celle-ci.

Ainsi le noyau NY est-il la partie centrale du micrologiciel PMAS, qui gère les différents modules PMF₁, PMF₂, PMO, PMM et organise les différentes tâches correspondant à ces micrologiciels. On rappelle qu'une tâche est un traitement correspondant à l'exécution d'un micrologiciel déterminé.

Il est clair que le micrologiciel PMAS chargé dans la mémoire vive MVI est mis en oeuvre dans le microprocesseur MIPI qui contient les circuits nécessaires à l'exécution du jeu de microinstructions qui définissent ce microprogramme. Dans une forme de réalisation préférée de l'invention, ce microprogramme est écrit en langage C.

Pour résumer ce qui a été décrit plus haut, le noyau NY et les modules PMO et PMM sont écrits dans la mémoire morte MPMI de la carte-mère CMI₁, alors que les modules PMF₁, PMF₂ sont écrits dans les mémoires mortes MPFI₁ et MPFI₂.

Le rôle du module micrologiciel PMF₁ (le rôle du micrologiciel PMF₂ est évidemment identique) est d'organiser la transmission des informations de l'organe périphérique OPER₁ vers la carte-mère, à travers le circuit d'application API₁ (ainsi, si le bus LB₃ est un bus parallèle sur huit bits, le circuit API₁ effectue la transformation de la liaison sur huit bits en une liaison 32 bits pour le bus BUSMI et vice-versa, ce qui est effectué, de manière connue, par un ensemble de registres associés à un dispositif multiplexeur), et ensuite d'en vérifier la cohérence, en regardant quelles sont les erreurs de parité, de vérifier les formats des trames transmises et si ces dernières sont cohérentes avec le mode de transmission spécifique à l'organe périphérique OPER₁, c'est-à-dire avec le protocole de transmission.

Le module micrologiciel PMM de la carte-mère CMI₁ ne s'occupe pas de vérifier une quelconque cohérence entre les trames transmises et le protocole et le format utilisé. Ceci est du ressort exclusif du module micrologiciel PMF₁. Par contre, il a pour rôle de transmettre les informations provenant des cartes-filles dont on a vérifié la cohérence et les formats, vers l'unité centrale CPU.

Il est clair que les modules micrologiciels PMF₁, PMF₂ etc, varient suivant le type de périphériques et pour un même périphérique varient suivant l'application que l'on met en oeuvre avec ce dernier.

On voit donc que le rôle de la carte-mère CMI est d'une part de transmettre les informations vers l'unité centrale CPU et d'autre part, de charger les modules logiciels des cartes-filles dans la mémoire vive MVI et ensuite d'exécuter ceux-ci sous la surveillance du noyau NY.

Lorsque l'on veut exécuter un programme d'application contenu dans une unité centrale CPU et mis en oeuvre par l'intermédiaire d'un organe périphérique OPER₁, on procède alors de la manière suivante, en se référant à l'organigramme montré à la figure 6 qui représente les différentes étapes du chargement du micrologiciel PMAS dans la mémoire vive MVI.

Ce chargement comprend d'une part une phase d'initialisation et d'autre part une séquence de six phases successives qui permettent de charger les modules micrologiciels tels que PMF₁, PMF₂, etc ...

### A/ INITIALISATION :

On initialise d'abord la carte-mère grâce au microprocesseur MIPI et ensuite, après avoir exécuté les tests habituels de bon fonctionnement des différents éléments constituant la carte-mère, on commence par charger dans la mémoire vive MVI le noyau NY du système puis on lance ce noyau. Ce dernier va alors chercher le module PMM contenu dans la mémoire morte MPMI de la carte-mère CMI₁, et le transférer dans MVI. De préférence, il va chercher également le moniteur PMO et le transférer dans MVI.

On rappelle que le moniteur est un micrologiciel d'aide à la mise au point des autres programmes permettant de visualiser, de modifier la mémoire SRAM et les registres du microprocesseur, d'arrêter l'exécution d'un programme à une adresse choisie et de le relancer. Au cours de l'exécution du micrologiciel PMAS, il n'y a pratiquement pas d'intervention du programme moniteur. En fait, le moniteur n'organise donc pas le travail en cours d'application mais il se contente d'un rôle de surveillant de l'exécution des différentes tâches du programme PMAS, à savoir NY, PMM et PMF₁.

### B/ CHARGEMENT DU MICROLOGICIEL PMF₁ DANS LA MEMOIRE VIVE MVI :

Ce chargement comporte donc six phases successives qui sont les suivantes :

Phase P₁ : cette phase est celle de la préparation de la structure d'accueil pour recevoir le micrologiciel PMF₁ : elle consiste essentiellement à préparer la zone de mémoire vive MVI qui va recevoir le micrologiciel PMF₁ ; ce qui revient à remettre à zéro l'emplacement mémoire qui va recevoir le micrologiciel PMF₁ et à indiquer les adresses qui seront affectées à ce programme.

Phase P₂ : il s'agit du test de la présence et du bon fonctionnement de la carte-fille CFI₁. Par ce test, on s'assure que la carte-fille CFI₁ est physiquement connectée à la carte-mère et que la carte-fille fonctionne correctement. Ceci est assuré par un bit spécial qui est présent au niveau de l'interface INI₁ et dont la valeur indique si la carte-fille fonctionne correctement. Il peut y avoir également un autre signal qui indique que le périphérique OPER₁ est réellement connecté et qu'il peut mettre en oeuvre l'application spécifique. Ce bit envoyé au microprocesseur MIPI est interprété par ce dernier. Si sa valeur est correcte, on passe à l'opération P₃ suivante. Si au contraire sa valeur est non correcte on passe directement au chargement du micrologiciel de la carte CFI₂.

Phase P₃ : il s'agit de la vérification du contenu de la mémoire MPFI₁ de la carte-fille CFI₁. Au cours de cette vérification, on vient analyser les premiers bits de la zone mémoire où sont inscrites les microinstructions du micrologiciel contenues dans la carte-fille CFI₁. Ces premiers bits indiquent par exemple le nom du module micrologiciel PMF₁, ce qui permet d'identifier de quel type de programme d'application il s'agit de mettre en oeuvre, les dates d'écriture du micrologiciel et de sa dernière mise à jour, la taille du module PMF₁, le nombre de paramètres de translation de celui-ci . Par ailleurs, il convient de vérifier si ceux-ci sont bien présents. On rappelle que les paramètres de translation (relocating parameters, en anglais) sont des paramètres qui permettent de déplacer en bloc, dans la mémoire vive MVI, le micrologiciel contenu dans la carte-fille vers cette mémoire vive, en modifiant en conséquence les adresses numériques qui sont contenues dans les instructions. Cela signifie que si les différentes microinstructions contenues dans le micrologiciel de la carte-fille CFI₁ sont écrites à des adresses, par exemple, 1, 2, 3, ..., j, etc, ces mêmes microinstructions seront contenues dans des zones mémoires de la carte vive MVI ayant les adresses j + k. Les paramètres de translation sont donc constitués par une étiquette indiquant un nom, qui est celui de la microinstruction et d'une adresse qui est l'adresse j où cette microinstruction est contenue dans la mémoire MPFI₁ de la carte-fille CFI₁. Ces paramètres de translation disent : à telle adresse j de la mémoire MPFI₁, il faudra changer la valeur de l'adresse j en une valeur j + k dans la mémoire vive MVI. La valeur à ajouter à k est indiquée par une microinstruction contenue dans le noyau NY.

En résumé, la vérification du contenu de la mémoire MPFI₁ consiste à lire au début de la zone mémoire où est inscrite le programme PMF₁ une série de bits qui indiquent que la mémoire MPFI₁ est déjà écrite. Si cette vérification s'avère positive, on passe ensuite à la phase suivante P₄, sinon, on passe directement au chargement du micrologiciel de la carte CFI₂.

Phase P₄ : Cette phase consiste à transférer le micrologiciel PMF₁ dans la mémoire vive MVI aux adresses prévues dans la phase P₁. On passe ensuite à la phase suivante P₅.

Phase P₅ : Cette phase consiste à adapter les adresses des branchements du micrologiciel carte-fille et celles des variables qui sont contenues dans ce micrologiciel aux nouvelles adresses de chargement en mémoire vive MVI. Dans cette opération, le microprocesseur MIPI vient lire les paramètres de translation et pour chacun d'entre eux ajoute à l'adresse j qui est indiquée la quantité k qui est la valeur à ajouter à l'adresse j pour avoir la nouvelle adresse j + k où la microinstruction correspondante va se trouver en mémoire vive MVI. L'opération P₅ permet donc de rendre exécutable en mémoire vive MVI le micrologiciel qui a été transféré de la mémoire morte MPFI₁ à la mémoire vive MVI de la carte-mère CMI₁. Dès que l'opération P₅ est terminée, on passe à l'opération suivante P₆.

Phase P₆ : Le micrologiciel PMAS est prêt à être exécuté. Cette exécution a lieu au moment choisi par l 'unité centrale CPU de l'ordinateur lorsque cette dernière est prête à exécuter le programme d'application mis en oeuvre par l'organe périphérique OPER₁. Dès que le micrologiciel a été exécuté, on passe ensuite au chargement en mémoire vive MVI du micrologiciel PMF₂ de la carte-fille CFI₂, ou de toute autre carte-fille analogue.

## Revendications

1. Coupleur multifonctions entre une unité centrale d'ordinateur (CPU) et les différents organes périphériques de ce dernier (OPER₁, OPER₂), contenant au moins un micrologiciel d'application (PMAS) commandant le transfert des informations entre d'une part, l'organe périphérique (OPER₁) mettant en oeuvre au moins un programme d'application contenu dans l'unité centrale, et d'autre part l'unité centrale proprement dite, le micrologiciel d'application contenant l'ensemble des microinstructions permettant d'assurer ledit transfert de façon cohérente, sans altération des différents signaux représentant les bits d'information comprenant une carte-mère (CMI₁) associée à au moins une carte-fille (CFI₁, CFI₂), la carte-mère (CMI₁) comportant :
- une première interface de connexion vers le bus de sortie (BUSI) de l'unité centrale (CPU) et une seconde interface de connexion vers la carte-fille (INI₁, INI₂),
- un microprocesseur de contrôle et de commande (MIPI) disposé entre la première et la seconde interface,
- une mémoire vive (MVI) et une première mémoire morte (MPMI) reliées au bus de sortie du microprocesseur (BUSMI),
- la carte-fille (CFI₁, CFI₂) comprenant une interface de connexion vers l'organe périphérique (INI₅, INI₆), et une interface de connexion avec la carte-mère (INI₃, INI₄),
caractérisé en ce que la carte-fille comprend une seconde mémoire morte (MPFI₁, MPFI₂) , le micrologiciel d'application (PMAS) comprenant une première partie (PMM) contenue dans la première mémoire morte (MPMI) de la carte-mère (CMI₁) , commune pour tous les micrologiciels d'application (PMAS) et une seconde partie (PMF₁) contenue dans la seconde mémoire morte (MPFI₁) de la carte-fille (CFI₁) spécifique à l'application mise en oeuvre par l'organe périphérique associé à la carte-fille (OPER₁), cette seconde partie non exécutable lorsqu'elle est en carte-fille, n'étant rendue exécutable qu'après son transfert dans la mémoire vive (MVI) de la carte-mère (CMI₁).

2. Coupleur selon la revendication 1, caractérisé en ce que la première et la seconde mémoire morte sont de type EPROM reprogrammable.

3. Coupleur selon l'une quelconque des revendications 1 ou 2, caractérisé en ce que la carte-fille comprend disposée entre les interfaces de connexion avec la carte-mère et l'organe périphérique, un circuit d'application (API₁, API₂) pour assurer la transmission des informations de l'organe périphérique (OPER₁, OPER₂) vers la carte-mère (CMI).

4. Coupleur selon l'une des revendications 1, 2, 3 caractérisé en ce que le noyau du micrologiciel d'application est contenu dans la première mémoire morte (MPMI), ce noyau (NY) étant la partie centrale de ce dernier, qui gère les différents modules le composant et organise les différentes tâches correspondant à ceux-ci.

5. Procédé de mise en oeuvre du coupleur selon la revendication 4 caractérisé en ce qu'il comprend successivement :
A/ Une phase d'initialisation où le noyau (NY) du micrologiciel d'application (PMAS) est chargé en mémoire vive (MVI), sa première partie (PMM) étant ensuite chargée sous la conduite du noyau, dans cette même mémoire vive.
B/ Une séquence de chargement de la seconde partie (PMF₁) comprenant six phases distinctes successives :
P₁) préparation de la structure d'accueil (mémoire vive MVI) qui reçoit la seconde partie (PMF₁, PMF₂) du micrologiciel d'application, en remettant à zéro l'emplacement de mémoire vive qui va la recevoir et en indiquant les adresses qui lui seront affectées,
P₂) test de la présence et de bon fonctionnement de la carte-fille (CFI₁),
P₃) vérification du contenu de la seconde mémoire morte (MPFI₁) et des paramètres de translation qu'elle contient,
P₄) transfert du contenu de la seconde mémoire morte dans la mémoire vive,
P₅) adaptation des adresses des branchements et des variables aux adresses de chargement en mémoire vive (MVI), pendant laquelle le microprocesseur (MIPI) lit les paramètres de translation et ajoute à l'adresse j indiquée, la quantité k à lui ajouter pour obtenir la nouvelle adresse j + k où la microinstruction correspondante va se trouver en mémoire vive (MVI)
P₆) exécution du micrologiciel d'application PMAS au moment choisi par l'unité centrale (CPU) de l'ordinateur.

## Patentansprüche

1. Multifunktionskoppler zwischen einer Zentraleinheit (CPU) eines Rechners und den verschiedenen Peripherieelementen dieses letzteren (OPER₁, OPER₂), der wenigstens eine Anwender-Mikrosoftware (PMAS) enthält, die die Übertragung von Informationen zwischen dem Peripherieelement (OPER₁) einerseits, das wenigstens ein in der Zentraleinheit enthaltenes Anwenderprogramm ausführt, und der eigentlichen Zentraleinheit andererseits steuert, wobei die Anwender-Mikrosoftware sämtliche Mikrobefehle enthält, die die Sicherstellung der Übertragung auf kohärente Weise ohne Änderung der verschiedenen die Informationsbits repräsentierenden Signale ermöglichen, mit einer Mutterkarte (CMI₁), zu der wenigstens eine Tochterkarte (CFI₁, CFI₂) gehört, wobei die Mutterkarte (CMI₁) enthält:
- eine erste Anschlußschnittstelle mit dem Ausgangsbus (BUSI) der Zentraleinheit (CPU) und eine zweite Anschlußschnittstelle mit der Tochterkarte (INI₁, INI₂),
- einen Überwachungs- und Steuerungsmikroprozessor (MIPI), der zwischen der ersten und der zweiten Schnittstelle angeordnet ist,
- einen flüchtigen Speicher (MVI) und einen ersten Festwertspeicher (MPMI), die mit dem Ausgangsbus des Mikroprozessors (BUSMI) verbunden sind,
- die Tochterkarte (CFI₁, CFI₂), die eine Anschlußschnittstelle mit dem Peripherieelement (INI₅, INI₆) sowie eine Anschlußschnittstelle mit der Mutterkarte (INI₃, INI₄) enthält,
dadurch gekennzeichnet, daß die Tochterkarte einen zweiten Festwertspeicher (MPFI₁, MPFI₂) enthält, wobei die Anwender-Mikrosoftware (PMAS) einen jeder Anwender-Mikrosoftware gemeinsamen ersten Teil (PMM), der im ersten Festwertspeicher (MPMI) der Mutterkarte (CMI₁) enthalten ist, sowie einen zweiten Teil (PMF₁) umfaßt, der im zweiten Festwertspeicher (MPFI₁) der Tochterkarte (CFI₁) enthalten ist und für die Anwendung spezifisch ist, die von dem zur Tochterkarte (OPER₁) gehörenden Peripherieelement ausgeführt wird, wobei dieser zweite Teil, der nicht ausführbar ist, wenn er sich in der Tochterkarte befindet, nur ausführbar gemacht wird, wenn er in den flüchtigen Speicher (MVI) der Mutterkarte (CMI₁) übertragen worden ist.

2. Koppler nach Anspruch 1, dadurch gekennzeichnet, daß der erste und der zweite Festwertspeicher vom umprogrammierbaren EPROM-Typ sind.

3. Koppler nach irgendeinem der Ansprüche 1 oder 2, dadurch gekennzeichnet, daß die Tochterkarte eine Anwenderschaltung (API_{I}, API₂) enthält, die zwischen den Anschlußschnittstellen mit der Mutterkarte und mit dem Peripherieelement angeordnet ist und die Übertragung der Informationen des Peripherieelements (OPER₁, OPER₂) zur Mutterkarte (CMI) gewährleistet.

4. Koppler nach einem der Ansprüche 1, 2, 3, dadurch gekennzeichnet, daß der Kern der Anwender-Mikrosoftware im ersten Festwertspeicher (MPMI) enthalten ist, wobei dieser Kern (NY) der zentrale Teil dieses letzteren ist, der die verschiedenen ihn aufbauenden Module steuert und die verschiedenen Aufgaben, die diesen entsprechen, verwaltet.

5. Verfahren zum Betreiben des Kopplers nach Anspruch 4, dadurch gekennzeichnet, daß es nacheinander enthält:
A/ eine Initialisierungsphase, in der der Kern (NY) der Anwender-Mikrosoftware (PMAS) in den flüchtigen Speicher (MVI) geladen wird, wobei ihr erster Teil (PMM) anschließend unter der Steuerung des Kerns in diesen flüchtigen Speicher geladen wird,
B/ eine Ladereihenfolge für den zweiten Teil (PMF₁), die sechs aufeinanderfolgende, verschiedene Phasen umfaßt:
P₁) Vorbereiten der Aufnahmestruktur (flüchtiger Speicher MVI), die den zweiten Teil (PMF₁, PMF₂) der Anwender-Mikrosoftware empfängt, indem die Stelle des flüchtigen Speichers, die sie empfangen wird, auf Null zurückgesetzt wird und indem die Adressen, die ihr zugewiesen werden, angegeben werden,
P₂) Prüfen des Vorhandenseins und der richtigen Funktion der Tochterkarte (CFI₁),
P₃) Verifizieren des Inhalts des zweiten Festwertspeichers (MPFI₁) und der Übersetzungsparameter, die er enthält,
P₄) Übertragen des Inhalts des zweiten Festwertspeichers in den flüchtigen Speicher,
P₅) Anpassen der Adressen der Verzweigungen und der Variablen an die Adressen zum Laden in den flüchtigen Speicher (MVI), währenddessen der Mikroprozessor (MIPI) die Übersetzungsparameter liest und zu der angegebenen Adresse j die ihr hinzuzufügende Größe k hinzufügt, um die neue Adresse j+k zu erhalten, wo sich der entsprechende Mikrobefehl im flüchtigen Speicher (MVI) befindet,
P₆) Abarbeiten der Anwender-Mikrosoftware PMAS in dem von der Zentraleinheit (CPU) des Rechners gewählten Zeitpunkt.

## Claims

1. A multifunction coupler between a computer central unit (CPU) and the various peripheral devices thereof (OPER₁, OPER₂), containing at least one piece of application firmware (PMAS) controlling the transfer of information between, on the one hand, the peripheral device (OPER₁) implementing at least one application program contained in the central unit and, on the other hand, the central unit proper, the application firmware containing all the micro-instructions allowing said transfer to be performed coherently, without impairing the various signals representing the information bits,
comprising a motherboard (CMI₁) associated with at least one daughterboard (CFI₁, CFI₂), the motherboard (CMI₁) comprising:
- a first connection interface to the output bus (BUSI) of the central unit (CPU) and a second connection interface to the daughterboard (INI₁, INI₂),
- a control and command microprocessor (MIPI) arranged between the first and second interface,
- a random access memory (MVI) and a first read-only memory (MPMI) linked to the output bus of the microprocessor (BUSMI),
- the daughterboard (CFI₁, CFI₂) comprising a connection interface to the peripheral device (INI₅, INI₆), and a connection interface with the motherboard (INI₃, INI₄),
characterised in that the daughterboard comprises a second read-only memory (MPFI₁, MPFI₂), the application firmware (PMAS) comprising a first portion (PMM) contained in the first read-only memory (MPMI) of the motherboard (CMI₁), common to all the pieces of application firmware (PMAS) and a second portion (PMF₁) contained in the second read-only memory (MPFI₁) of the daughterboard (CFI₁) specific to the application implemented by the peripheral device associated with the daughterboard (OPER₁), this second portion, not executable when it is in a daughterboard, being made executable only after its transfer to the random access memory (MVI) of the motherboard (CMI₁).

2. A coupler according to Claim 1, characterised in that the first and second read-only memories are of the reprogrammable EPROM type.

3. A coupler according to any one of Claims 1 or 2, characterised in that the daughterboard comprises, arranged between the connection interfaces with the motherboard and the peripheral device, an application circuit (API₁, API₂) for transmitting information from the peripheral device (OPER₁, OPER₂) to the motherboard (CMI).

4. A coupler according to one of Claims 1, 2, 3 characterised in that the core of the application firmware is contained in the first read-only memory (MPMI), this core (NY) being the central portion thereof, which manages the various modules composing it and organises the various tasks corresponding to said modules.

5. A process for implementing the coupler according to Claim 4, characterised in that it comprises in succession:
A) An initialisation phase where the core (NY) of the application firmware (PMAS) is loaded into random access memory (MVI), its first portion (PMM) then being loaded, under the control of the core, into the same random access memory.
B) A sequence for loading the second portion (PMF₁) comprising six distinct successive phases:
P₁) preparation of the host structure (random access memory MVI) which receives the second portion (PMF₁, PMF₂) of the application firmware, while resetting to zero the random access memory location which is to receive it and while indicating the addresses that will be assigned thereto,
P₂) test for the presence and correct operation of the daughterboard (CFI₁),
P₃) verification of the content of the second read-only memory (MPFI₁) and of the relocating parameters it contains,
P₄) transfer of the content of the second read-only memory (MPFI₁) into the random access memory,
P₅) matching the addresses of the branches and of the variables to the addresses for loading into random access memory (MVI), during which the microprocessor (MIPI) reads the relocating parameters and adds, to the address j indicated, the quantity k to be added thereto in order to obtain the new address j + k where the corresponding micro-instruction is to be found in random access memory (MVI)
P₆) executing the application firmware PMAS at the time chosen by the central unit (CPU) of the computer.
